# EUROPÄISCHE PATENTANMELDUNG

(11) **EP 2 937 633 A1**
(43) Veröffentlichungstag der Anmeldung: **28.10.2015**
(21) Anmeldenummer: 14165365.9
(22) Anmeldetag: 22.04.2014
(51) Int. Cl.: F24C 15/20, B01D 53/32

(54) **Einrichtung zur Luftreinigung, Lüftungseinrichtung und Verfahren zur Luftreinigung**

(71) Anmelder: E.G.O. Elektro-Gerätebau GmbH, 75038 Oberderdingen (DE)
(72) Erfinder: Brandenburg, Ronny, 17495 Greifswald (DE); Kettlitz, Manfred, 13156 Berlin (DE); Reich, Wolfgang, 17489 Greifswald (DE); Weltmann, Klaus-Dieter, 18609 Binz (DE); Schönemann, Konrad, 75056 Sulzfeld (DE); Gärtner, Norbert, 76275 Ettlingen (DE); Schaumann, Uwe, 75038 Oberderdingen (DE)
(74) Vertreter: Patentanwälte Ruff, Wilhelm, Beier, Dauster & Partner mbB

(57) **Zusammenfassung**

Die Erfindung betrifft eine Einrichtung zur Luftreinigung mit einem Einlass, einem Auslass und einem Luftkanal, in welchem eine Plasma-Luftbehandlungseinheit mit einer Anzahl von länglichen zylinderförmigen Plasmaquellen angeordnet ist. An den Plasmaquellen strömt durch den Luftkanal strömende Luft vorbei. Die Erfindung betrifft des Weiteren eine Lüftungseinrichtung mit einer solchen Einrichtung zur Luftbehandlung, beispielsweise eine Dunstabzugshaube, sowie ein Verfahren zur Luftreinigung.

## Beschreibung

### Anwendungsgebiet und Stand der Technik

Die Erfindung betrifft eine Einrichtung zur Luftreinigung mit einem Einlass, einem Auslass, einem zwischen dem Einlass und dem Auslass strömungsmäßig angeordneten Luftkanal und einer in dem Luftkanal angeordneten Plasma-Luftbehandlungseinheit.

Derartige Einrichtungen zur Luftreinigung können beispielsweise in Dunstabzugshauben verwendet werden. Sie ermöglichen eine Neutralisation von unerwünschten Substanzen, die beispielsweise Gerüche verursachen, welche insbesondere bei der Zubereitung von Lebensmitteln entstehen können. Dies ist vor allem dann vorteilhaft, wenn der Auslass nicht wie früher üblich ins Freie führt, sondern im Inneren eines Hauses angeordnet ist. Derartige Umluftsysteme treten in jüngster Zeit verstärkt auf, um zu vermeiden, dass geheizte Luft nach außen geblasen wird. Damit kann der Energieverbrauch eines Hauses gesenkt werden.

Eine beispielhafte Einrichtung ist in der DE 102011082928 A1 gezeigt. Die Plasma-Luftbehandlungseinheit dieser Einrichtung weist zwei Platten auf, zwischen welchen ein Plasma durch Anlegen einer elektrischen Spannung erzeugt wird. Dieses Plasma enthält ionisierte und reaktive Teilchen, welche mit unerwünschten Substanzen, beispielsweise organischen Molekülen, reagieren und diese umwandeln können. Damit kann zwar eine Reinigung der Luft erzielt werden, jedoch weisen derartige Platten ein ungünstiges Strömungsverhalten und je nach Lage bzw. Einbaulage einen hohen Luftwiderstand auf.

Die Erfindung betrifft des Weiteren eine Lüftungseinrichtung mit einer solchen Einrichtung zur Luftreinigung, bei welcher ähnliche Probleme auftreten. Des Weiteren betrifft die Erfindung ein Verfahren zur Luftreinigung, bei dessen Durchführung ebenfalls ähnliche Probleme auftreten.

### Aufgabe und Lösung

Es ist deshalb Aufgabe der Erfindung, eine Einrichtung zur Luftreinigung zu schaffen, welche vorzugsweise hinsichtlich des Strömungsverhaltens optimiert ist. Es ist des Weiteren eine Aufgabe der Erfindung, eine Lüftungseinrichtung mit einer solchen Einrichtung zu schaffen. Außerdem ist es eine Aufgabe der Erfindung, ein Verfahren zur Luftreinigung zu schaffen, welches ebenfalls entsprechend optimiert ist.

Dies wird erfindungsgemäß durch eine Einrichtung zur Luftreinigung nach Anspruch 1, eine Lüftungseinrichtung nach Anspruch 13 und ein Verfahren zur Luftreinigung nach Anspruch 14 erreicht. Vorteilhafte sowie bevorzugte Ausgestaltungen der Erfindung sind Gegenstand der weiteren Ansprüche und werden im Folgenden näher erläutert. Dabei werden manche der Merkmale nur für die Einrichtung, die Lüftungseinrichtung oder das Verfahren erläutert. Sie sollen jedoch unabhängig davon sowohl für die Einrichtung, die Lüftungseinrichtung als auch das Verfahren selbstständig gelten können. Der Wortlaut der Ansprüche wird durch ausdrückliche Bezugnahme zum Inhalt der Beschreibung gemacht.

Die Einrichtung zur Luftreinigung weist auf einen Einlass, einen Auslass, einen zwischen dem Einlass und dem Auslass strömungsmäßig angeordneten Luftkanal und eine in dem Luftkanal angeordnete Plasma-Luftbehandlungseinheit.

Erfindungsgemäß ist vorgesehen, dass die Plasma-Luftbehandlungseinheit eine Anzahl von länglichen zylinderförmigen Plasmaquellen aufweist, an welchen durch den Luftkanal strömende Luft vorbeiströmt. Damit wird ein vorteilhaftes Strömungsverhalten bei geringerem Luftwiderstand erreicht, da die länglichen zylinderförmigen Plasmaquellen einen niedrigeren Luftwiderstand aufweisen als die aus dem Stand der Technik bekannten Platten und somit leichter von Luft umströmt werden können. Durch die gleichmäßigere Verteilung der Luft bzw. Durchströmung mit Luft wird auch eine bessere Reinigungswirkung erreicht.

Der Einlass kann beispielsweise über einem Kochfeld angeordnet sein, auf welchem beim Kochen Substanzen entstehen können, insbesondere organische Moleküle, die unerwünschte Gerüche verursachen. Der Auslass kann beispielsweise im Inneren des gleichen Raums angeordnet sein, um die am Einlass angesaugte Luft nach Reinigung durch die Plasma-Luftbehandlungseinheit wieder in den gleichen Raum zurückzuführen nach einem sogenannten Umluft-Prinzip. Damit können die entstandenen Gerüche neutralisiert werden, ohne dass Energie aufgrund eines Ausblasens von Luft nach außen verloren geht. Alternativ kann der Auslass jedoch auch zur umgebenden Luft, also nach außen bzw. ins Freie, gerichtet sein nach einem sogenannten Abluft-Prinzip. Damit kann die am Einlass angesaugte Luft direkt nach außen geführt werden, was beispielsweise eine noch bessere Eliminierung von Gerüchen im Innenraum ermöglicht. Durch die Plasma-Luftbehandlungseinheit kann dann sowohl Umluft als auch Abluft behandelt werden, so dass die ins Freie geführte Luft keine Belästigung für die nähere Umgebung darstellt. Es ist auch denkbar, die Einrichtung derart auszuführen, dass zwischen diesen beiden Möglichkeiten umgeschaltet werden kann, also dass der Auslass sowohl nach innen als auch nach außen geführt werden kann bzw. ein Betrieb sowohl mittels Umluftführung als auch mittels Abluftführung erfolgen kann. Damit kann beispielsweise während der Heizperiode der Auslass zum Innenraum gerichtet sein und im Sommer nach außen. Beispielsweise kann hierzu eine betätigbare Klappe vorgesehen sein.

Die Einrichtung weist bevorzugt ferner ein Gebläse auf, welches im Betrieb Luft am Einlass ansaugt und aus dem Auslass herausbläst. Die Einrichtung kann ferner weitere Komponenten wie beispielsweise einen Filter aufweisen, welcher grobe Verunreinigungen aus der am Einlass angesaugten Luft entfernen kann. Der Filter kann beispielsweise auch bereits vor dem Einlass angeordnet sein, um ein Eindringen von entsprechend großen Partikeln zu verhindern.

Gemäß möglicher Ausführungen ist eine weitere Plasma-Luftbehandlungseinheit oder eine Mehrzahl von weiteren Plasma-Luftbehandlungseinheiten in dem Luftkanal angeordnet, wobei eine jeweilige weitere Plasma-Luftbehandlungseinheit eine Anzahl von länglichen zylinderförmigen weiteren Plasmaquellen aufweist, an welchen durch den Luftkanal strömende Luft bzw. Abluft vorbeiströmt. Damit kann die Reinigungswirkung weiter verbessert werden. Außerdem können durch gezielte Kombinationen von Merkmalen der Plasma-Luftbehandlungseinheit und der weiteren Plasma-Luftbehandlungseinheit Synergieeffekte erzielt werden, wie weiter unten beschrieben werden wird.

Gemäß einer Ausführung sind die weiteren Plasmaquellen zumindest einer weiteren Plasma-Luftbehandlungseinheit mit einem Winkel zwischen 10° und 90° zu den Plasmaquellen der Plasma-Luftbehandlungseinheit angeordnet, vorteilhaft zwischen 30° und 90°. Bevorzugt sind sie quer zu den Plasmaquellen der Plasma-Luftbehandlungseinheit angeordnet. Dies kann für alle weiteren Plasmaquellen oder auch nur für einen Teil der weiteren Plasmaquellen gelten. Durch die Kombination von Anordnungen kann erreicht werden, dass unerwünschte Teilchen in der Luft bzw. Umluft oder Abluft mit besonders hoher Wahrscheinlichkeit nahe einer Plasmaquelle entlang geführt werden, vorteilhaft weniger als 1 cm bis 3cm, und somit zur Reaktion gebracht werden und damit sozusagen aus der Luft entfernt werden.

Gemäß einer Ausgestaltung sind die Plasmaquellen der Plasma-Luftbehandlungseinheit und/oder die weiteren Plasmaquellen einer jeweiligen weiteren Plasma-Luftbehandlungseinheit in einem jeweiligen Rahmen montiert, welcher als Einschub in den Luftkanal einbringbar ist und/oder welcher als Aufsatzstück auf einen Flansch der Einrichtung aufsetzbar ist. Damit kann ein einfacher Austausch, eine Wartung oder auch ein Nachrüsten von entsprechenden Plasma-Luftbehandlungseinheiten in der Einrichtung ermöglicht werden.

Bevorzugt sind dabei die Plasma-Luftbehandlungseinheit und/oder jeweilige weitere Plasma-Luftbehandlungseinheiten jeweils als eigenständiges Modul ausgebildet. Dies erleichtert in besonderer Weise das Einsetzen und Herausnehmen von jeweiligen Plasma-Luftbehandlungseinheiten. Außerdem kann beispielsweise eine neue Version einer Plasma-Luftbehandlungseinheit nachgerüstet werden, ohne ansonsten irgendwelche Änderungen an der Einrichtung vorzunehmen.

Gemäß einer bevorzugten Ausführung weist eine jeweilige Plasmaquelle oder weitere Plasmaquelle ein Röhrchen aus elektrisch isolierendem Material, bevorzugt Keramik, eine erste Elektrode, welche stabförmig ausgebildet ist und das Röhrchen von innen auskleidet, und eine zweite Elektrode auf, welche spiralförmig ausgebildet ist und das Röhrchen außen umgibt. Mittels einer solchen Plasmaquelle kann in vorteilhafter Weise ein nicht-thermisches Plasma erzeugt werden, wenn zwischen der ersten Elektrode und der zweiten Elektrode eine zeitlich veränderliche Hochspannung, vorzugsweise Wechselspannung, angelegt wird. Dabei entsteht um die Plasmaquelle herum ein Plasma innerhalb eines gewissen Radius, welches dazu geeignet ist, unerwünschte Substanzen in der Luft zu zersetzen. Es ist einerseits möglich, dass alle Plasmaquellen derart ausgebildet sein können, oder dass alternativ nur einige der Plasmaquellen oder weitere Plasmaquellen derart ausgebildet sein können.

Bevorzugt ist die erste Elektrode geerdet, vorzugsweise über einen außerhalb des Kanals und seitlich zum Kanal liegenden Masseanschluss. Die zweite Elektrode ist weiter bevorzugt mit einer Hochspannungsversorgung verbunden, vorzugsweise Wechselhochspannung, wie oben erwähnt. Hierfür kann vorzugsweise auf Hochspannungsquellen bzw. Wechselhochspannungsquellen gemäß dem Stand der Technik zurückgegriffen werden. Zur Durchführung von elektrischen Anschlüssen durch den Kanal kann beispielsweise eine isolierende Schraube verwendet werden. Durch diese kann in geeigneter Weise ein Anschluss hindurchgelegt werden, ohne einen Kurzschluss zu erzeugen oder andere Teile der Einrichtung unter Spannung zu setzen, was unter Umständen lebensgefährlich wäre.

Durch die beschriebene Ausführung wird in vorteilhafter Weise die Erzeugung eines Plasmas um die Plasmaquelle herum erreicht als sogenannte Oberflächen-Barrierenentladung oder dielektrisch behinderte Entladung. Dieses entsteht im Wesentlichen aufgrund der zeitlich veränderlichen Spannungsdifferenz zwischen der ersten Elektrode und der umgebenden zweiten Elektrode.

Bevorzugt sind die zweiten Elektroden einzeln oder in Gruppen separat zu- und abschaltbar. Damit kann ausgewählt werden, welche Plasmaquellen oder weiteren Plasmaquellen zu einem bestimmten Zeitpunkt ein Plasma erzeugen sollen. Beispielsweise kann damit die Reinigungsleistung an die momentane Konzentration unerwünschter Substanzen in der Luft angepasst werden. Hierzu können beispielsweise auch ein Luftgütesensor und eine entsprechende Steuerung verwendet werden. Dies ermöglicht es, bei nur wenig verunreinigter Luft Plasmaquellen abzuschalten und damit Energie einzusparen.

Gemäß einer Ausgestaltung sind die Plasmaquellen der Plasma-Luftbehandlungseinheit parallel zueinander ausgerichtet. Gemäß einer weiteren Ausgestaltung sind jeweilige weitere Plasmaquellen einer jeweiligen weiteren Plasma-Luftbehandlungseinheit parallel zueinander ausgerichtet. Dies ermöglicht einen einfachen Aufbau und eine gleichmäßige Luftdurchführung.

Gemäß weiteren Ausgestaltungen sind die Plasmaquellen der Plasma-Luftbehandlungseinheit und/oder die weiteren Plasmaquellen einer jeweiligen weiteren Plasma-Luftbehandlungseinheit quer zur Strömungsrichtung der Luft im Luftkanal ausgerichtet. Damit wird eine vorteilhafte Verteilung der Luft über die Plasmaquellen erreicht, so dass unerwünschte Substanzen mit hoher Wahrscheinlichkeit an einer Plasmaquelle vorbeikommen und dort zersetzt werden.

Bevorzugt sind in Strömungsrichtung der Luft gesehen zwischen, vor und/oder hinter den quer zur Strömungsrichtung ausgerichteten Plasmaquellen oder weiteren Plasmaquellen eine Anzahl von Gasleitblechen zur Lenkung einer durch den Kanal fließenden Strömung der Luft auf die Plasmaquellen oder weiteren Plasmaquellen angeordnet. Damit kann in vorteilhafter Weise eine erhöhte Konzentration von Luft und damit auch von unerwünschten Substanzen an den Plasmaquellen erreicht werden, so dass möglichst viele unerwünschte Substanzen an den Plasmaquellen zersetzt werden können.

Gemäß jeweiligen Ausführungen sind die Plasmaquellen oder weiteren Plasmaquellen in einer Anzahl von Reihen angeordnet, welche in Strömungsrichtung der Luft gesehen hintereinander angeordnet sind, wobei vorzugsweise die jeweiligen Reihen quer zur Strömungsrichtung ausgerichtet sind. Durch eine solche Ausführung werden eine einfache Anordnung und ein vorteilhaftes Strömungsbild erreicht.

Gemäß jeweiligen Ausführungen sind die Plasmaquellen in der Plasma-Luftbehandlungseinheit und/oder die weiteren Plasmaquellen zumindest einer weiteren Plasma-Luftbehandlungseinheit parallel zur Strömungsrichtung der Luft ausgerichtet. Hierdurch wird erreicht, dass die Luft besonders lange in Kontakt mit den Plasmaquellen kommen kann. Eine solche Ausführung kann insbesondere dann verwendet werden, wenn ein entsprechend langer Einbauraum für die Plasmaquellen zur Verfügung steht.

Insbesondere ist es bevorzugt, wenn Längs- und Querrichtung kombiniert werden. Beispielsweise kann die Plasma-Luftbehandlungseinheit Plasmaquellen aufweisen, welche quer zur Strömungsrichtung ausgerichtet sind, wohingegen eine weitere Plasma-Luftbehandlungseinheit Plasmaquellen aufweist, welche parallel zur Strömungsrichtung angeordnet sind. Damit kann eine besonders vorteilhafte Reinigung der Luft erreicht werden. Besonders bevorzugt sind bei einer solchen Ausführung die jeweiligen Plasmaquellen der Plasma-Luftbehandlungseinheit parallel zueinander ausgerichtet, und auch die Plasmaquellen der weiteren Plasma-Luftbehandlungseinheit sind bevorzugt ebenfalls parallel zueinander ausgerichtet.

Die Erfindung betrifft des Weiteren eine Lüftungseinrichtung mit einer erfindungsgemäßen vorbeschriebenen Einrichtung zur Luftreinigung. Damit werden die bereits erwähnten Vorteile der Einrichtung für eine Lüftungseinrichtung nutzbar gemacht. Hinsichtlich der erfindungsgemäßen Einrichtung kann auf alle weiter oben beschriebenen Ausführungen und Varianten zurückgegriffen werden. Erläuterte Vorteile gelten entsprechend. Die Lüftungseinrichtung kann eine Dunstabzugshaube, ein Kühlschrank/Kühlgerät, eine zentrale oder dezentrale Lüftungsanlagen für die Lüftung von Gebäude-Innenräumen oder Kfz, ein Gerät zur Innenraum-Luftverbesserung in Gebäuden oder Kfz mit Umluftbetrieb, eine Klimaanlage für Gebäude oder Kfz sein oder im Zulufttrakt von Kfz-Innenräumen zur Vermeidung von Geruchsbelästigung von außen angeordnet sein.

Die Erfindung betrifft des Weiteren ein Verfahren zur Reinigung von Luft bzw. Abluft, bei welchem die Luft in einem Luftkanal an einer Anzahl von länglichen zylinderförmigen Plasmaquellen vorbeigeleitet wird, an welchen jeweils ein Plasma erzeugt wird. Hinsichtlich der Ausgestaltung der länglichen zylinderförmigen Plasmaquellen kann auf alle mit Bezug zu der erfindungsgemäßen Einrichtung beschriebenen Ausführungen und Varianten zurückgegriffen werden. Erläuterte Vorteile gelten entsprechend.

Besonders bevorzugt wird das Verfahren mittels einer erfindungsgemäßen Lüftungseinrichtung wie beispielsweise einer Dunstabzugshaube ausgeführt. Damit können die bereits erwähnten Vorteile der erfindungsgemäßen Lüftungseinrichtung für das erfindungsgemäße Verfahren genutzt werden. Hinsichtlich der erfindungsgemäßen Lüftungseinrichtung sowie des Verfahrens zur Luftreinigung kann auf alle beschriebenen Ausführungen und Varianten zurückgegriffen werden. Erläuterte Vorteile gelten entsprechend.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1:: eine Plasma-Luftbehandlungseinheit,
- Fig. 2:: eine Plasmaquelle,
- Fig. 3:: die Plasma-Luftbehandlungseinheit von Fig. 1 in einer anderen Ansicht,
- Fig. 4a bis 4c:: schematische Anordnungen von Plasmaquellen,
- Fig. 5:: eine alternative Ausführung einer Plasma-Luftbehandlungseinheit und
- Fig. 6:: eine Dunstabzugshaube als Lüftungseinrichtung mit einer Einrichtung zur Luftreinigung.

### Detaillierte Beschreibung der Ausführungsbeispiele

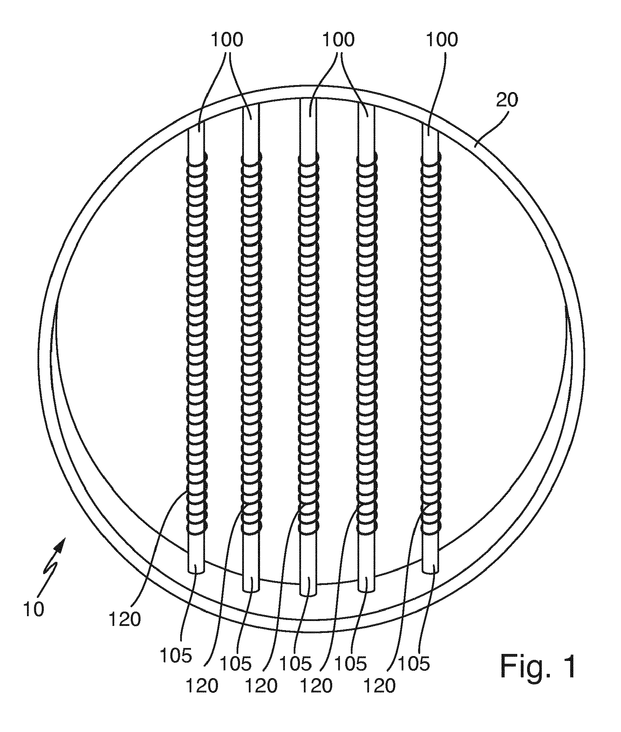

Fig. 1 zeigt eine Plasma-Luftbehandlungseinheit 10. Diese weist eine Umrandung 20 auf und kann als Modul in einen Luftkanal einer Dunstabzugshaube eingebracht werden, die zum Arbeiten entweder im Umluftbetrieb oder im Abluftbetrieb ausgebildet ist. Somit ist die Plasma-Luftbehandlungseinheit 10 als Bestandteil einer Einrichtung zur Luftreinigung verwendbar.

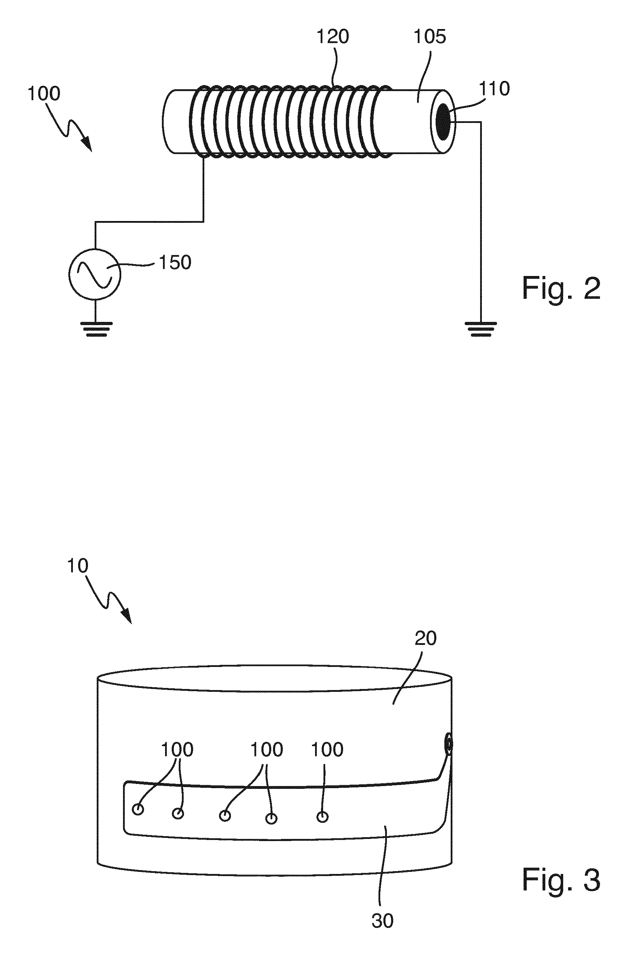

Die Plasma-Luftbehandlungseinheit 10 weist ferner insgesamt fünf Plasmaquellen 100 auf, welche quer zu einem durch die Einrichtung 10 strömenden Luftstrom und zueinander parallel ausgerichtet sind. Jede der Plasmaquellen 100 weist ein Röhrchen 105 aus elektrisch isolierender Keramik auf, wobei das Röhrchen 105 mit einer jeweiligen zweiten Elektrode 120 spiralförmig umwickelt ist. Weitere Details der Plasmaquellen 100 werden weiter unten mit Bezug zu Fig. 2 beschrieben.

Die Plasmaquellen 100 ermöglichen eine Reinigung von durch die Einrichtung 10 strömender Luft, indem um jede der Plasmaquellen 100 herum ein Plasma erzeugt wird, in welchem ionisierte und reaktive Teilchen mit unerwünschten Substanzen in der Luft reagieren und diese so zersetzen. Hierzu wird an jeweilige Elektroden der jeweiligen Plasmaquellen 100 bevorzugt eine Wechselhochspannung angelegt, wie dies weiter unten noch näher beschrieben wird.

Fig. 2 zeigt schematisch eine Plasmaquelle 100 in größerer Detailliertheit. Dabei weist die Plasmaquelle 100 ein Röhrchen 105 aus Keramik auf, welche ein elektrisch gut isolierendes Material darstellt. Innerhalb des Röhrchens 105 ist eine erste Elektrode 110 angeordnet, welche das Röhrchen 105 von innen auskleidet.

Das Röhrchen 105 ist ferner mit einer zweiten Elektrode 120 spiralförmig umwickelt. Die zweite Elektrode 120 ist mit einer Quelle 150 einer Wechselhochspannung verbunden. Hierbei handelt es sich anders ausgedrückt um eine zeitlich veränderliche Hochspannung. Beispielsweise kann unter dem Begriff "Hochspannung" eine Spannung von einigen 1000 V bis einigen 10.000 V verstanden werden.

Die erste Elektrode 110 ist demgegenüber geerdet. Somit kann mittels der Quelle 150 von Wechselhochspannung eine zeitlich veränderliche Spannungsdifferenz zwischen der ersten Elektrode 110 und der zweiten Elektrode 120 erzeugt werden. Dies führt in bekannter Weise dazu, dass bei Betrieb der Quelle 150 die Plasmaquelle 100 von einem Plasma umgeben ist, in welchem sich eine hohe Konzentration ionisierter bzw. reaktiver Teilchen befindet. Ein solches Plasma kann unerwünschte Substanzen zersetzen und damit neutralisieren, beispielsweise organische Moleküle, welche sich in einer vorbeiströmenden Luft befinden.

Fig. 3 zeigt eine Außenansicht der Einrichtung 10. Dabei ist zu erkennen, dass auf der Umrandung 20 der Einrichtung 10 außenseitig ein Leitblech 30 als Masseanschluss aufgebracht ist. Das Leitblech 30 umschließt insbesondere Durchbrüche der Plasmaquellen 100 in der Umrandung 20. Somit dient das Leitblech 30 als Masseanschluss für die jeweiligen ersten Elektroden 110 der Plasmaquellen 100.

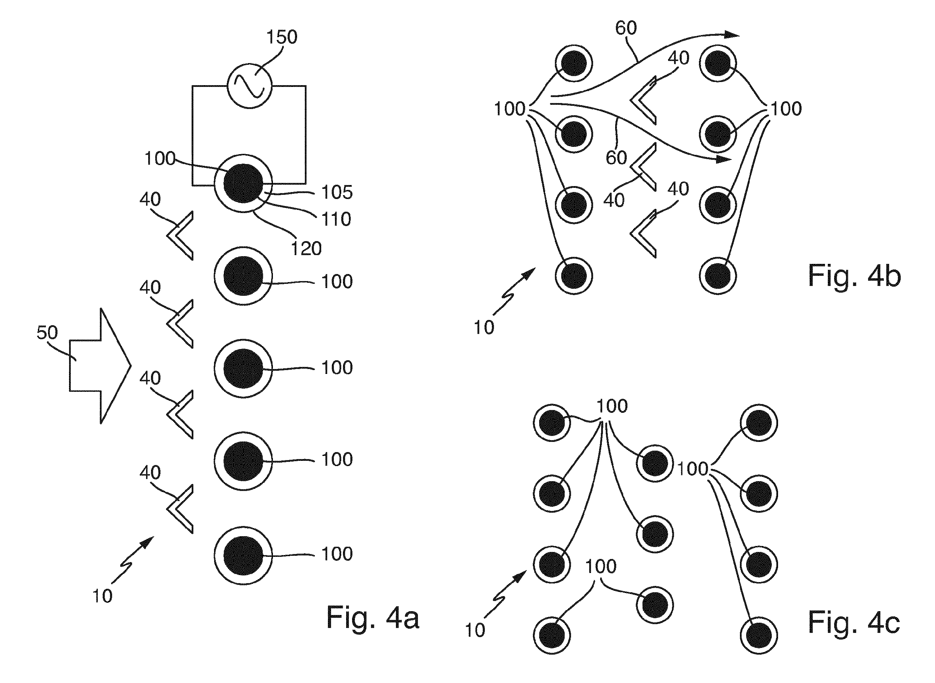

In den Fig. 4a bis 4c sind jeweilige mögliche Anordnungen der Plasmaquellen 100 der Plasma-Luftbehandlungseinheit 10 gezeigt. Dabei soll gelten, dass diese möglichen Anordnungen universell angewendet werden können, also auch in anderen Ausführungen als in denjenigen, welche mit Bezug zu den anderen Figuren beschrieben sind.

In Fig. 4a sind fünf Plasmaquellen 100 in einer Reihe angeordnet, welche quer zu einem Luftstrom 50 liegt. Die Plasmaquellen 100 sind auch selbst jeweils quer zum Luftstrom 50 angeordnet. Jede der Plasmaquellen 100 weist, wie dies bereits mit Bezug zu Fig. 2 detaillierter beschrieben wurde, ein Röhrchen 105, eine erste Elektrode 110 und eine zweite Elektrode 120 auf. Diese sind in den Fig. 4a bis 4c lediglich schematisch dargestellt, wobei bezüglich weiterer Details auf Fig. 2 und die zugehörige Beschreibung verwiesen wird. Deshalb sind diese Bestandteile lediglich bei einer Plasmaquelle 100 in Fig. 4a nochmals mit Bezugszeichen versehen.

Die Plasmaquellen 100 sind jeweils mit einer Quelle 150 von Wechselhochspannung verbunden, was ebenfalls lediglich bei einer der Plasmaquellen 100 in Fig. 4a schematisch gezeigt ist. Aus Gründen der Vereinfachung ist dies bei den anderen Plasmaquellen 100 in den Fig. 4a bis 4c nicht mehr gezeigt.

Strömungsmäßig vor den Plasmaquellen 100 sind insgesamt vier Gasleitbleche 40 angeordnet, welche den Luftstrom 50 jeweils aufteilen und direkter auf die Plasmaquellen 100 leiten. Damit kann eine bessere Zuführung der zu behandelnden Luft zu den Plasmaquellen 100 erreicht werden. Dies gilt insbesondere deshalb, weil die unerwünschten Substanzen, welche an den Plasmaquellen 100 zersetzt werden sollen, typischerweise eine höhere Masse und damit auch eine höhere Trägheit haben als übliche Luftmoleküle wie Stickstoff oder Sauerstoff. Die Reinigungswirkung kann damit verbessert werden.

Fig. 4b zeigt eine Anordnung von insgesamt acht Plasmaquellen 100, welche in zwei Reihen angeordnet sind. Die Reihen sowie die Plasmaquellen 100 selbst liegen dabei jeweils quer zur Strömungsrichtung von Luft. Zwischen den Reihen sind insgesamt drei Gasleitbleche 40 angeordnet, welche eine verbesserte Zuleitung der Luft zu den Plasmaquellen 100 der strömungsmäßig zweiten Reihe ermöglichen. Typische Strömungsverläufe sind durch Pfeile 60 dargestellt. Somit wird die Luft zunächst ohne besondere Zuleitung von den Plasmaquellen 100 der ersten Reihe und anschließend mit besonderer Zuleitung von den Plasmaquellen 100 der zweiten Reihe behandelt. Damit kann insbesondere in dem Fall, in welchem sich unerwünschte Substanzen bzw. Teilchen mit deutlich unterschiedlichen Molekülmassen in der Luft befinden, eine besonders gute Reinigungswirkung erreicht werden, da schwerere Teilchen aufgrund ihrer größeren Trägheit zwischen den Plasmaquellen der ersten Reihe hindurchfliegen würden. Mit Gasleitblechen werden sie abgelenkt und treten somit in die Plasmaatmosphäre der zweiten Reihe ein.

Fig. 4c zeigt nochmals eine andere Anordnung von insgesamt elf Plasmaquellen 100, wobei die in Fig. 4c gezeigte Anordnung aus der in Fig. 4b gezeigten Anordnung dadurch hervorgeht, dass die Gasleitbleche 40 durch jeweilige Plasmaquellen 100 ersetzt werden. Auch diese Plasmaquellen 100 bewirken eine gewisse Lenkung der Strömung auf die Plasmaquellen 100 der in Fig. 4c dargestellten rechten Reihe, erzeugen jedoch selbst auch einen zusätzlichen Reinigungseffekt.

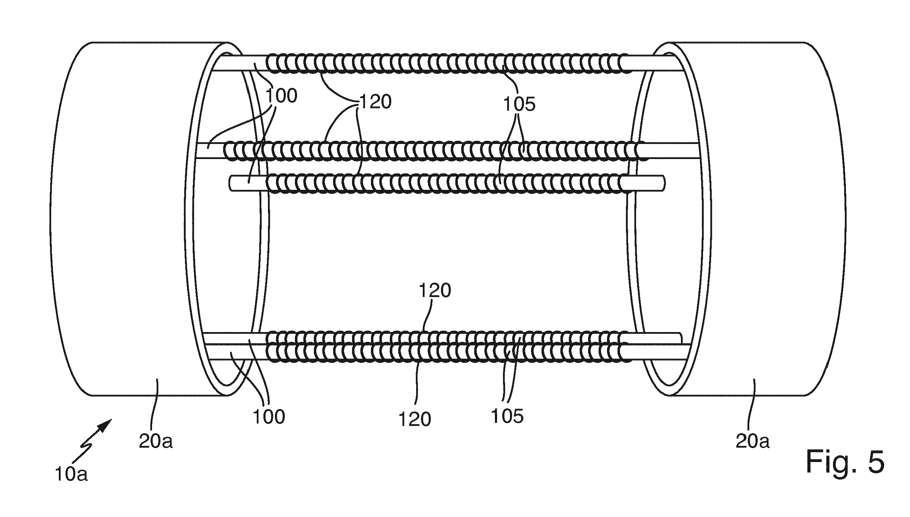

Fig. 5 zeigt eine alternative Ausführung einer Plasma-Luftbehandlungseinheit 10a, in welcher die Plasmaquellen 100 nicht quer, sondern längs zum Luftstrom ausgerichtet sind. Dabei sind zwei ringartige Umrandungen 20a vorgesehen, durch die Luft hindurchströmen kann, wobei zwischen den beiden Umrandungen 20a insgesamt fünf Plasmaquellen 100 längs zum Luftstrom angeordnet sind. Die Plasmaquellen 100 weisen dabei jeweils ein Röhrchen 105, eine nicht sichtbare erste Elektrode sowie eine zweite Elektrode 120 auf. Diesbezüglich kann auf die obigen Ausführungen zu den Plasmaquellen verwiesen werden.

Durch die Anordnung längs zum Luftstrom kann vorbeiströmende Luft besonders lange in Kontakt mit den Plasmaquellen 100 sein. Dies ermöglicht eine besonders vorteilhafte Reinigungswirkung. Insbesondere kann eine solche Plasma-Luftbehandlungseinheit 10a gemäß Fig. 5 mit einer Plasma-Luftbehandlungseinheit 10, wie sie in Fig. 1 dargestellt wurde, kombiniert werden. Beispielsweise können sie in Strömungsrichtung der Luft gesehen in Reihe hintereinander angeordnet sein. Dies ermöglicht dann eine Kombination der jeweiligen Vorteile und eine besonders gute Reinigungswirkung.

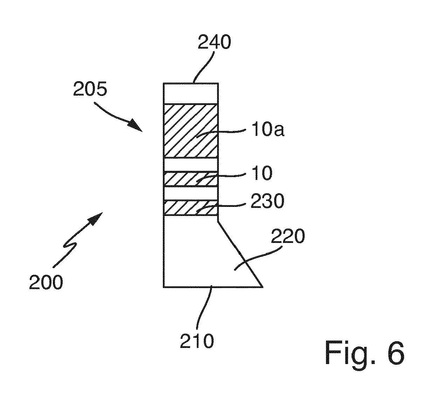

Fig. 6 zeigt schematisch eine Dunstabzugshaube 200, welche mit einer Einrichtung 205 zur Luftreinigung versehen ist. Die Einrichtung 205 zur Luftreinigung weist einen Einlass 210 auf, welcher typischerweise über einem Kochfeld angeordnet sein kann. Sie weist ferner einen Luftkanal 220 auf, in welchen durch den Einlass 210 angesaugte Luft strömt. Außerdem weist sie ein Gebläse 230 auf, welches Luft durch den Einlass 210 ansaugt und dafür sorgt, dass diese durch den Luftkanal 220 strömt.

Stromabwärts vom Gebläse 230 weist die Einrichtung 205 eine Plasma-Luftbehandlungseinheit 10 sowie eine weitere Plasma-Luftbehandlungseinheit 10a auf, wobei die Plasma-Luftbehandlungseinheit 10 wie in Fig. 1 ausgeführt ist und die weitere Plasma-Luftbehandlungseinheit 10a wie in Fig. 5 ausgeführt ist. Somit werden vorliegend die Vorteile beider Ausführungen kombiniert, d.h. die jeweiligen Ausrichtungen der Plasmaquellen quer bzw. längs zum Luftstrom. Das Gebläse 230 kann vorteilhaft auch hinter den Plasma-Luftbehandlungseinheiten angeordnet sein. Außerdem weist die Einrichtung 205 einen Auslass 240 auf, durch welchen die durch die Plasma-Luftbehandlungseinheiten 10, 10a gereinigte Luft wieder in die Umgebung abgegeben werden kann. Aufgrund der Reinigungswirkung kann sich der Auslass 240 auch in einem Zimmer befinden, ohne eine übermäßige Belästigung mit Gerüchen hervorzurufen. Dies kann insbesondere Vorteile hinsichtlich des Energieverbrauchs der Heizung des Zimmers haben, da ein Ausblasen von erwärmter Luft ins Freie vermieden wird.

## Patentansprüche

1. Einrichtung zur Luftreinigung, aufweisend
- einen Einlass (210),
- einen Auslass (240),
- einen zwischen dem Einlass (210) und dem Auslass (240) strömungsmäßig angeordneten Luftkanal (220), und
- eine in dem Luftkanal (220) angeordnete Plasma-Luftbehandlungseinheit (10, 10a),
**dadurch gekennzeichnet, dass**
die Plasma-Luftbehandlungseinheit (10, 10a) eine Anzahl von länglichen zylinderförmigen Plasmaquellen (100) aufweist, an welchen durch den Luftkanal (220) strömende Luft vorbei strömt.

2. Einrichtung nach Anspruch 1, **dadurch gekennzeichnet, dass**
- eine weitere Plasma-Luftbehandlungseinheit (10, 10a) oder eine Mehrzahl von weiteren Plasma-Luftbehandlungseinheiten (10, 10a) in dem Luftkanal (220) angeordnet ist,
- wobei eine jeweilige weitere Plasma-Luftbehandlungseinheit (10, 10a) eine Anzahl von länglichen zylinderförmigen weiteren Plasmaquellen (100) aufweist, an welchen durch den Luftkanal (220) strömende Luft vorbeiströmt.

3. Einrichtung nach Anspruch 2, **dadurch gekennzeichnet, dass** die weiteren Plasmaquellen (100) zumindest einer weiteren Plasma-Luftbehandlungseinheit (10, 10a) mit einem Winkel zwischen 10° und 90° zu den Plasmaquellen (100) der Plasma-Luftbehandlungseinheit (10, 10a) angeordnet sind, vorzugsweise quer.

4. Einrichtung nach einem der vorhergehenden Ansprüche, **dadurch gekennzeichnet, dass**
- die Plasmaquellen (100) der Plasma-Luftbehandlungseinheit (10, 10a) und/oder die weiteren Plasmaquellen (100) einer jeweiligen weiteren Plasma-Luftbehandlungseinheit (10, 10a) in einem jeweiligen Rahmen (20) montiert sind, welcher als Einschub in den Luftkanal (220) einbringbar ist und/oder welcher als Aufsatzstück auf einen Flansch der Einrichtung (205) aufsetzbar ist,
- wobei vorzugsweise die Plasma-Luftbehandlungseinheit (10, 10a) und/oder jeweilige weitere Plasma-Luftbehandlungseinheiten (10, 10a) jeweils als eigenständiges Modul ausgebildet sind.

5. Einrichtung nach einem der vorhergehenden Ansprüche, **dadurch gekennzeichnet, dass** eine jeweilige Plasmaquelle (100) oder weitere Plasmaquelle (100) folgendes aufweist:
- ein Röhrchen (105) aus elektrisch isolierendem Material, bevorzugt Keramik,
- eine erste Elektrode (110), welche stabförmig ausgebildet ist und das Röhrchen (105) von innen auskleidet, und
- eine zweite Elektrode (120), welche spiralförmig ausgebildet ist und das Röhrchen (105) außen umgibt.

6. Einrichtung nach Anspruch 5, **dadurch gekennzeichnet, dass**
- die erste Elektrode (110) geerdet ist, vorzugsweise über einen außerhalb des Kanals (220) und seitlich zum Kanal liegenden Masseanschluss (30), und
- die zweite Elektrode (120) mit einer Quelle (150) einer zeitlich veränderlichen Hochspannung, vorzugsweise Wechselhochspannung, verbunden ist.

7. Einrichtung nach Anspruch 6, **dadurch gekennzeichnet, dass** die zweiten Elektroden (120) einzeln oder in Gruppen separat zuschaltbar und abschaltbar sind.

8. Einrichtung nach einem der vorhergehenden Ansprüche, **dadurch gekennzeichnet, dass**
- die Plasmaquellen (100) der Plasma-Luftbehandlungseinheit (10, 10a) parallel zueinander ausgerichtet sind,
und/oder dass
- jeweilige weitere Plasmaquellen (100) einer jeweiligen weiteren Plasma-Luftbehandlungseinheit (10, 10a) parallel zueinander ausgerichtet sind.

9. Einrichtung nach einem der vorhergehenden Ansprüche, **dadurch gekennzeichnet, dass** die Plasmaquellen (100) der Plasma-Luftbehandlungseinheit (10, 10a) und/oder die weiteren Plasmaquellen (100) einer jeweiligen weiteren Plasma-Luftbehandlungseinheit (10, 10a) quer zur Strömungsrichtung (50) der Luft im Luftkanal (220) ausgerichtet sind.

10. Einrichtung nach Anspruch 9, **dadurch gekennzeichnet, dass** in Strömungsrichtung (50) der Luft gesehen zwischen, vor und/oder hinter den quer zur Strömungsrichtung ausgerichteten Plasmaquellen (100) oder weiteren Plasmaquellen (100) eine Anzahl von Gasleitblechen (40) zur Lenkung einer durch den Kanal (220) fließenden Strömung der Luft auf die Plasmaquellen (100) oder weiteren Plasmaquellen (100) angeordnet sind.

11. Einrichtung nach Anspruch 9 oder 10, **dadurch gekennzeichnet, dass**
- die Plasmaquellen (100) oder weiteren Plasmaquellen (100) in einer Anzahl von Reihen angeordnet sind, welche in Strömungsrichtung (50) der Luft gesehen hintereinander angeordnet sind,
wobei vorzugsweise die jeweiligen Reihen quer zur Strömungsrichtung (50) ausgerichtet sind.

12. Einrichtung nach einem der vorhergehenden Ansprüche, **dadurch gekennzeichnet, dass** die Plasmaquellen (100) der Plasma-Luftbehandlungseinheit (10, 10a) und/oder die weiteren Plasmaquellen (100) zumindest einer weiteren Plasma-Luftbehandlungseinheit (10, 10a) parallel zur Strömungsrichtung (50) der Luft ausgerichtet sind.

13. Lüftungseinrichtung (200) mit einer Einrichtung (205) nach einem der vorhergehenden Ansprüche.

14. Verfahren zur Luftreinigung, bei welchem die Luft in einem Luftkanal (220) an einer Anzahl von länglichen zylinderförmigen Plasmaquellen (100) vorbeigeleitet wird, an welchen jeweils ein Plasma erzeugt wird.

15. Verfahren nach Anspruch 14, welches mittels einer Lüftungseinrichtung (200) nach Anspruch 13 ausgeführt wird.
